# EUROPEAN PATENT APPLICATION

(11) **EP 2 573 952 A2**
(43) Date of publication of application: **27.03.2013**
(21) Application number: 12005502.5
(22) Date of filing: 27.07.2012
(51) Int. Cl.: H04B 5/02, H04B 5/00

(54) **Varying load modulation in an NFC-enabled device over a range of field strength**

(30) Priority: 23.09.2011 US 201113242162
(71) Applicant: Broadcom Corporation, Irvine, CA 92617 (US)
(72) Inventor: Royston, Philip, Newbury RG14 1RQ (GB); Wilson, Robin, Cirencester GL7 1UN (GB); Marholev, Bojko, 23434 Lomma (SE)
(74) Representative: Jehle, Volker Armin

(57) **Abstract**

An NFC-enabled device includes a load modulation communication section providing two or more selectable changes in the load impedance across the antenna terminals. At least one of the two or more selectable changes is dependent on both the transmit data and the concurrently detected strength of a tag reader field coupled to the NFC antenna.

## Description

### Field of the Invention

The present invention relates generally to Near Field Communication (NFC) devices and the operation and application thereof. More particularly, the present invention relates to methods and apparatus for measuring the strength of an NFC reader field and adjusting the load modulation of a tag reader.

### Background

Near Field Communication (NFC) involves contactless, or wireless, communication between devices where those devices are spaced apart only a small distance and coupling between a field generated by a first device and an antenna of a second device takes place. In one mode of operation, information is communicated from the second device to the first device when the second device modulates the impedance across its antenna terminals and the impact on the coupled field is detected by the first device. Since the detectable impact on the field is caused by modulating the impedance across the antenna terminals, this communications scheme is referred to as load modulation.

The ability to communicate wirelessly, but only over very short distances, provides a framework for a range of secure personal interactions with electronic devices, products, and systems.

Indeed, personal applications have gone beyond the deskbound model of interacting with a computer to a model wherein computing and communication hardware are truly personal items, are highly mobile, and are integrated into the fabric of modern living. Consistent with this usage model for powerful personal computational and communication devices, many applications of "on-the-go" computing and communication have been, and are being, developed. One class of such on-the-go applications involves NFC between devices. Applications such as conducting financial transactions with stores, banks, trains, busses, and so on may be facilitated by the near-field coupling of two devices to exchange financial and/or personal information.

It will be appreciated that in an interaction between a first and a second NFC device, wherein at least one of the devices is maneuvered into near field coupling range by a person, there is likely to be variability in the relative position of such devices from one use to the next. As a consequence of the lack of strict uniformity in positioning, variations in coupled field strength will occur.

Conventional NFC devices that communicate by way of load modulation do not account for the non-uniformity of field strength, regardless of whether that non-uniformity results from alignment variations or other reasons.

What is needed are methods and apparatus for varying load modulation in an NFC-enabled device over a range of tag reader field strength.

### BRIEF SUMMARY OF THE INVENTION

According to an aspect of the invention, a method is provided of operating a communications device, comprising:
selecting, at the communications device, a first load-modulation load;
determining, by the communications device, a field strength of a field coupled to the communications device;
selecting, at the communications device, a second load-modulation load, if the field strength is greater than a threshold value.

Advantageously, the communications device is an NFC-enabled device.

Advantageously, the field is an NFC reader field.

Advantageously, the first load-modulation load and the second load-modulation load each comprise one or more transistors.

Advantageously, the method further comprises load modulating the field with the first load-modulation load.

Advantageously, the method further comprises load modulating the field with the second load-modulation load.

Advantageously, the load modulating with the first load and the second load occurs simultaneously.

According to an aspect, a method is provided of operating a communications device, comprising:
generating a signal indicative of a field strength of a tag reader field;
comparing the signal to at least a first threshold and producing a comparison result signal; and
producing a load-modulation load based at least in part on the comparison result signal.

Advantageously, the load-modulation load has an impedance value that decreases when the first threshold is exceeded.

According to an aspect, a method of operating an NFC-enabled device comprises:
providing a first load-modulation load and a second load-modulation load;
generating a signal indicative of whether a strength of a field to which the NFC-enabled device is coupled is greater than a predetermined threshold value;
selecting the first load-modulation load if the strength of the field is not greater than the predetermined threshold; and
selecting the second load-modulation load if the strength of the field is greater than the predetermined threshold;
wherein the second load-modulation load has a lower impedance than the first load-modulation load.

According to an aspect, an NFC-enabled device comprises:
an antenna;
a load-modulation load sub-circuit coupled to the antenna; and
a load-modulation load controller coupled to the antenna and to the load-modulation load sub-circuit;
wherein the load-modulation load controller provides one or more control signals to the load-modulation load sub-circuit; and
wherein the load-modulation load sub-circuit, responsive to the one or more control signals, provides a predetermined load impedance.

Advantageously, the load-modulation load controller includes a shunt regulator coupled to the antenna.

Advantageously, the predetermined load impedance includes a first impedance when the NFC-enabled device detects a reader field strength less than a threshold value, and a second impedance when the detected reader field strength is greater than the threshold value.

Advantageously, the first impedance is greater than the second impedance.

Advantageously, load-modulation load sub-circuit includes two or more electrical paths between the a first antenna terminal and a second antenna terminal.

According to an aspect, a near-field communication device comprises:
a load-modulation load sub-circuit operable to provide at least two predetermined load-modulation load impedances;
wherein the load-modulation load impedance provided by the load-modulation load sub-circuit is dependent on the data being transmitted, and a magnitude of a reader field strength coupled to the near-field communication device.

Advantageously, the load-modulation load sub-circuit includes at least two individually switchable electrical pathways.

According to an aspect, a near-field communication device comprises:
a load-modulation load sub-circuit operable to provide a continuously variable load-modulation load impedance;
wherein the load-modulation load impedance provided by the load-modulation load sub-circuit is dependent on the data being transmitted, and a magnitude of a field strength coupled to the near-field communication device.

Advantageously, the impedance of the load-modulation load sub-circuit is set by an analog signal derived from a sampled and held measurement of the field strength prior to data being transmitted.

Advantageously, the field strength is a reader field strength.

### BRIEF DESCRIPTION OF THE DRAWINGS

Embodiments of the invention are described with reference to the accompanying drawings. In the drawings, like reference numbers indicate identical or functionally similar elements. Additionally, the left most digit(s) of a reference number identifies the drawing in which the reference number first appears.

Fig. 1 is a block diagram illustrating a near field communication (NFC) environment in accordance with the present invention.

Fig. 2 is a high-level block diagram illustrating a hardware architecture suitable for varying the load-modulation load based at least in part on the strength of the reader field to which the tag antenna is coupled.

Fig. 3 is a high-level circuit block diagram of the load modulation control block 206 shown in Fig. 2.

Fig. 4 is a simplified schematic diagram of a shunt regulator suitable for use in embodiments of the present invention.

Fig. 5 is a high-level block diagram of an illustrative variable load-modulation load having a first portion directly controlled by transmit data, and a second portion controlled, at least in part, by the strength of the reader field coupled to the tag antenna.

Fig. 6 is a schematic diagram of an illustrative variable load-modulation load including bipolar transistors, each in series with one or more components representing a predetermined impedance.

Fig. 7 is a schematic diagram of an illustrative variable load-modulation load including a pair of FETs coupled, drain-to-source, in parallel between the antenna terminals of a tag antenna.

Fig. 8 is a schematic diagram of an illustrative variable load-modulation load including two parallel paths between the antenna terminals of a tag antenna, wherein at least one of the two parallel paths includes two or more FETs coupled to each other in series.

Fig. 9 is a schematic diagram of an illustrative variable load-modulation load including a plurality of parallel paths between the antenna terminals of a tag antenna, wherein a first one of the paths is directly controlled by transmit data, and the impedance of at least two of the other paths of the plurality of paths are dependent on the strength of the reader field coupled to the tag antenna.

Fig. 10 is a schematic diagram of an illustrative control sub-circuit for a variable load-modulation load in accordance with the present invention.

Fig. 11 is a flow diagram of a process in accordance with the present invention.

### DETAILED DESCRIPTION

Generally, embodiments of the present invention use a field strength measurement signal to control the level of load modulation so that when the reader signal is strong, a low impedance load modulator can be used to improve the signal seen by the reader. In a weaker field a higher impedance load modulator is used to ensure that the reader clock can be recovered by the tag or tag emulator. In this way, the requirements imposed on an NFC communications device by various NFC communications specifications, and by the tag or tag emulator, can be maintained over a wider operational range than conventional NFC communication devices.

The following Detailed Description refers to accompanying drawings of illustrative embodiments of the invention. References in the Detailed Description to "one exemplary embodiment," "an illustrative embodiment", "an exemplary embodiment," and so on, indicate that the embodiment referred to may include a particular feature, structure, or characteristic, but every exemplary embodiment may not necessarily include the particular feature, structure, or characteristic. Moreover, such phrases are not necessarily referring to the same exemplary embodiment. Further, when a particular feature, structure, or characteristic is described in connection with an exemplary embodiment, it is within the knowledge of those skilled in the relevant art(s) to affect such feature, structure, or characteristic in connection with other exemplary embodiments whether or not explicitly described.

The exemplary embodiments described herein are provided for illustrative purposes, and are not limiting. Other exemplary embodiments are possible, and modifications may be made to the exemplary embodiments within the spirit and scope of the invention. Therefore, the Detailed Description is not meant to limit the invention. Rather, the scope of the invention is defined only in accordance with the subjoined claims and their equivalents.

This Detailed Description of the exemplary embodiments will so fully reveal the general nature of the invention that others can, by applying knowledge of those skilled in relevant art(s), readily modify and/or adapt for various applications such exemplary embodiments, without undue experimentation, without departing from the spirit and scope of the invention. Therefore, such adaptations and modifications are intended to be within the meaning and plurality of equivalents of the exemplary embodiments based upon the teaching and guidance presented herein. It is to be understood that the phraseology or terminology herein is for the purpose of description and not of limitation, such that the terminology or phraseology of the present specification is to be interpreted by those skilled in relevant art(s) in light of the teachings herein.

Although the description of the present invention is to be described in terms of NFC, those skilled in the relevant art(s) will recognize that the present invention may be applicable to other communications that use the near field and/or the far field without departing from the spirit and scope of the present invention. For example, although the present invention is to be described using NFC-capable devices, those skilled in the relevant art(s) will recognize that functions of these NFC-capable devices may be applicable to other communications devices that use the near field and/or the far field without departing from the spirit and scope of the present invention.

Terminology

As used herein, the expression "Near-field communicator" refers to a product that includes at least the resources to provide NFC tag and NFC tag reader functionality. Such products may be sometimes referred to as NFC-enabled devices.

The terms, chip, die, integrated circuit, semiconductor device, and microelectronic device, are often used interchangeably in the field of electronics. The present invention is applicable to all of the above as these terms are generally understood in the field.

With respect to chips, it is common that power, ground, and various signals may be coupled between them and other circuit elements via physical, electrically conductive connections. Such a point of connection may be referred to as an input, output, input/output (I/O), terminal, line, pin, pad, port, interface, or similar variants and combinations. Although connections between and amongst chips are commonly made by way of electrical conductors, those skilled in the art will appreciate that chips and other circuit elements may alternatively be coupled by way of optical, mechanical, magnetic, electrostatic, and electromagnetic interfaces.

The acronym FET refers to a Field Effect Transistor.

The term "gate" is context sensitive and can be used in two ways when describing integrated circuits. As used herein, gate refers to a circuit for realizing an arbitrary logical function when used in the context of a logic gate. Gate refers to the insulated gate terminal of a three terminal FET when used in the context of transistor circuit configuration. The expression "gate terminal" is generally interchangeable with the expression "gate electrode" and either of these can be used to refer to the insulated gate terminal of a three terminal FET. Although a FET can be viewed as a four terminal device when the semiconductor body is considered, for the purpose of describing illustrative embodiments of the present invention, the FET will be described using the traditional gate-drain-source, three terminal model.

Source/drain terminals refer to the terminals of a FET, between which conduction occurs under the influence of an electric field, subsequent to the inversion of the semiconductor surface under the influence of a perpendicular electric field resulting from a voltage applied to the gate terminal. Generally, the source and drain terminals are fabricated such that they are geometrically symmetrical. With geometrically symmetrical source and drain terminals it is common to simply refer to these terminals as source/drain terminals, and this nomenclature is used herein. Designers often designate a particular source/drain terminal to be a "source" or a "drain" on the basis of the voltage to be applied to that terminal when the FET is operated in a circuit.

The term "varactor" refers to a voltage variable capacitor. By way of non-limiting examples, voltage variable capacitors may be formed by devices such as diodes, FETs, and MEMS devices. A voltage variable capacitor may be formed by a diode since the junction capacitance between the anode and cathode of the diode is related to the magnitude of the reverse bias applied across the diode junction. Similarly, a FET can be used as voltage variable capacitor. It is well-known that the capacitance between the gate terminal and the semiconductor body of the FET is related to the voltage applied to the gate terminal and the effect of that applied voltage on the depth of the depletion region. That is, FET gate capacitance is highest after inversion of the channel and lowest when the depletion region under the gate has reached its maximum depth. MEMS devices can also be used as voltage variable capacitors. A MEMS varactor typically functions by varying the distance between two capacitor plates under control of an applied voltage.

The expression "load modulation" refers generally to the modulation of a field generated by a first device by modifying the impedance across an antenna, or a coil, coupled to that field. As used in connection with NFC devices herein, load modulation refers to a process by which an NFC tag modifies an NFC reader field such that the reader may extract data from the modified field. Typically the tag modifies the reader field by modulating the impedance, i.e., the load, across the tag antenna during a time when it is coupled to the reader field. The modulation of the load is performed in accordance with the data that the tag is communicating to the reader. The reader device detects this data-dependent load modulation and extracts the data from the modulated reader field.

The term "smartcard" refers to a physical substrate, such as a credit card-sized piece of plastic, having an integrated circuit embedded therein. Typically, smartcards are used for financial transactions or secure access to locked facilities. An active smartcard is one that includes an embedded power supply such as a battery. A passive smartcard is one that requires power to be supplied from an external source. In some instances, the external source is an energization field from which the passive smartcard harvests the energy needed to carry out its desired function. Smartcards that are NFC-enabled can communicate with other devices in a contactless, or wireless manner.

AN ILLUSTRATIVE NEAR FIELD COMMUNICATIONS ENVIRONMENT

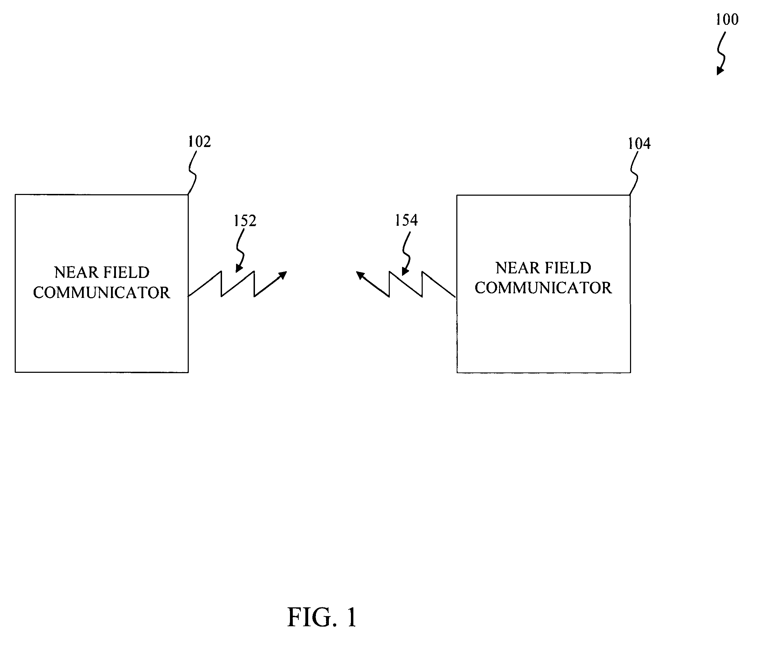

Fig. 1 is a block diagram showing an NFC environment in accordance with the present invention. An NFC environment **100** provides wireless communication of information among a first NFC device **102** and a second NFC device **104** that are sufficiently proximate to each other. The information may include one or more commands to be executed by first NFC device **102** and/or second NFC device **104,** data from one or more data storage devices that is to be transferred to first NFC device **102** and/or second NFC device **104,** or any combination thereof. The data storage devices may include one or more contactless transponders, one or more contactless tags, one or more contactless smartcards, any other machine-readable media, or any combination thereof. Other machine-readable media may include non-transitory storage media, such as but not limited to, volatile memory, e.g., random access memory (RAM); non-volatile memory, e.g., read only memory (ROM), flash memory, magnetic disk storage media, and optical storage media. Still other machine-readable media may include electrical, optical, acoustical or other forms of propagated signals such as carrier waves, infrared signals, and digital signals, to provide some examples.

Improvements in manufacturing technologies and digital architecture have resulted in a number of products and product categories that were not previously possible or practical to implement. The emerging developments in the area of Near Field Communication (NFC) circuits, systems and applications is making new products and product categories possible. Products incorporating Near-Field Communication capabilities are sometimes referred to as NFC-enabled. For example, mobile phones, smart cards, key fobs, secure access cards, tablet computers, or other electronic products that include NFC capabilities are referred to as NFC-enabled. Near-field communication allows data to be communicated from a first NFC-enabled device to a second NFC-enabled device over short distances. Although a strict definition for the range of short distances is not agreed upon in the field, short range for NFC usually is thought of as being less than 4 cm, or within one wavelength of the selected communication frequency, typically 13.56 MHz.

Typical NFC arrangements involve a pair of devices in which a first device acts as a target or "tag" to respond to a communication and a second device within a near-field coupling distance of the first device acts as a "reader" to initiate the communication. In various embodiments of the present invention the first device may be equipped with the circuitry for acting as both a tag and a reader, commonly referred to as a communicator. Electronic products that include NFC tag circuitry along with circuitry for other functionality may be referred to as tag emulators, or to have the capability of operating in "tag emulation mode". Similarly, electronic products that include NFC reader circuitry along with circuitry for other functionality may be referred to as reader emulators, or to have the capability of operating in "reader emulation mode".

As will be described in greater detail below, NFC-enabled devices and applications have utility in at least consumer electronics and industrial products.

In connection with the following illustrative embodiments, it is noted that any reference to a computational platform is intended to include similar computational devices and computers regardless of their form factor or input/output configuration. By way of example, and not limitation, a smartphone is a computational platform.

AN ILLUSTRATIVE FIELD STRENGTH-DEPENDENT LOAD MODULATOR

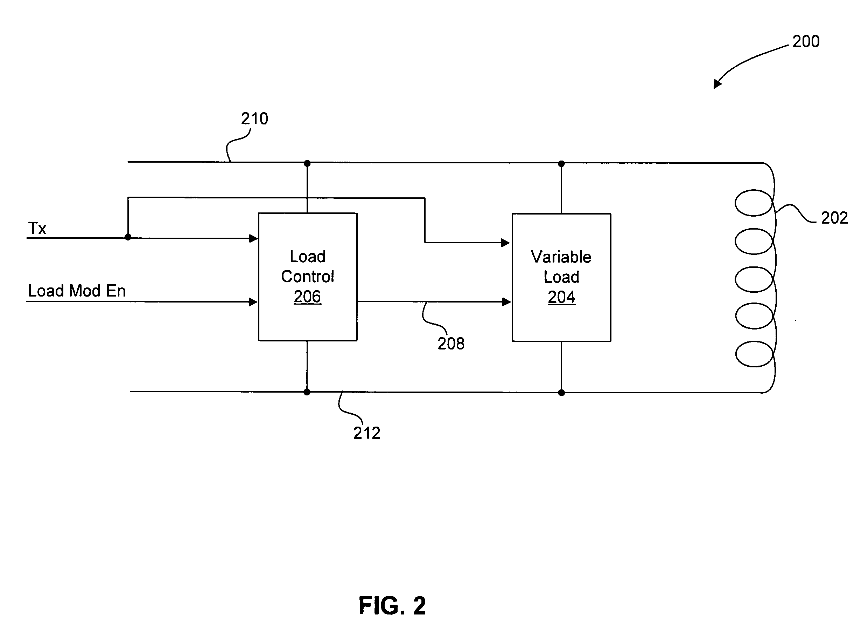

Fig. 2 illustrates a load modulation communication section of an NFC communications device in accordance with the present invention. Rather than having only a single change in impedance that is dependent only on the transmit data, embodiments of the present invention provide two or more changes in impedance that are dependent on the both the transmit data and the concurrently detected strength of a tag reader field coupled to the NFC antenna.

Referring more particularly to Fig. 2, a circuit **200** is shown that includes a tag antenna **202,** having a first antenna terminal **210** and a second antenna terminal **212.** A variable load-modulation load sub-circuit **204** is coupled between terminals **210, 212,** of antenna **202.** A load control sub-circuit **206** is coupled between terminals **210, 212.** A transmit signal, Tx, is coupled as an input to both variable load-modulation load sub-circuit **204** and to load control sub-circuit **206.** A timing control signal, LoadModEn, is coupled as an input to load control sub-circuit **206.** In this illustrative embodiment, both Tx and LoadModEn are digital signals. Load control sub-circuit **206** generates as an output a digital signal **208,** which is coupled as an input to variable load-modulation load sub-circuit **204.**

Variable load-modulation load sub-circuit **204** is responsible for communication between the tag and a tag reader (not shown) by changing, that is modulating, the load across antenna terminals **210, 212** responsive to the state of signal Tx. Some or all of the components shown in Fig. 2 may be, but are not required to be, integrated onto a single chip.

In the illustrative embodiment of Fig. 2, signal Tx controls a change in the load across antenna terminals **210, 212** by a first amount. When signal **208** is asserted, signal Tx controls the change in load across antenna terminals **210, 212** by a second amount. In some embodiments the first and second amounts are nominally fixed amounts.

In typical embodiments of the present invention, a default value for the load modulation load is chosen for each specific antenna design. Again, in typical embodiments, subsequent to a communication in which the load-modulation load has been varied, the default load-modulation load will be re-selected for the next communication. Various embodiments of the present invention use predetermined values of load impedance in the load-modulation load sub-circuit, where the selected load is based, at least in part, on the specific antenna design to be used with the corresponding load-modulation load sub-circuit.

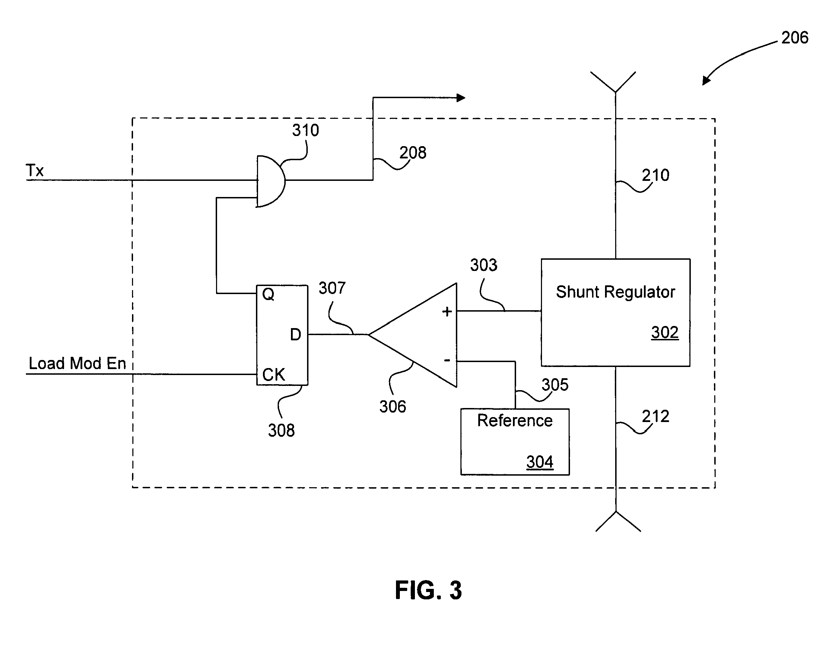

Referring to Fig. 3, a more detailed schematic block diagram of load control sub-circuit **206** includes a shunt regulator **302** that is coupled between antenna terminals **210, 212.** Shunt regulator **302** provides an output signal **303** that is representative of the strength of the field to which antenna **202** is coupled. A reference **304** provides an output signal **305** that represents a field strength value above which a low impedance load modulator can be used to improve the signal seen by the reader. Reference **304** may be fixed or programmable. In typical operation scenarios the output of reference **304** is not changed.

In various alternative embodiments, where this tag, or tag emulator, is to be used with two or more different antennas, a programmable reference **304** may be used to provide an updated reference value for use with each of the different antennas. In another alternative, reference **304** contains a plurality of fixed reference values to accommodate a selected one or more of the two or more different antennas. In this embodiment reference **304** would be provided with a selection signal indicating which of its plurality of reference values should be output for comparison with output signal **303** of shunt regulator **302.**

Still referring to reference **304,** in a further embodiment, the reference value that is output may be changed based, at least in part, on error rates in an on-going communication. In a still further embodiment, a communications protocol stack (typically implemented in software) provides control information such that the reference value that is output by reference **304** may be changed based on the determinations of the communications protocol stack. In some embodiments reference **304** is addressable and the address that selects a particular output value is placed in a reference address register (not shown) coupled to reference **304.** In some embodiments the reference address register is visible to the protocol stack software and may be directly controlled by the software of the protocol stack.

A comparator **306** is coupled to receive as inputs both the output signal **303** of shunt regulator **302** and output signal **305** of reference **304.** Comparator **306** generates an output signal **307** that is a logical one when the low impedance load-modulation load should be used and a logical zero otherwise. That is, when the strength of the coupled reader field exceeds a predetermined value, then the state of output signal **307** is such that a low impedance modulation load is used for communicating with the reader.

Still referring to Fig. 3, output signal **307** is coupled to a D input terminal of a D-type flip-flop **308.** In this illustrative embodiment, flip-flop **308** is not reset during operation. However, within the scope of the present invention, an alternative implementation may reset flip-flop **308** at one or more predetermined times or for one or more predetermined conditions, to a known state. In some instances, resetting elements such as flip-flops facilitates testing of circuits as part of the manufacturing process. As shown in Fig. 3, flip-flop **308** is clocked by the signal LoadModEn. The timing of LoadModEn is such that flip-flop **308** loads the output of comparator 306 at the start of, or just prior to, each response frame in an NFC tag/reader communications protocol. In other words, flip-flop **308** is rising edge triggered and LoadModEn make a low to high transition just prior to each response frame and returns to a low state at the end of the frame. The output of flip-flop **308** is steady state when the LoadModEn signal is high. In this way, the load-modulation load does not change during a data exchange between the tag, or tag emulator, and the reader.

A Q output terminal of flip-flop **308** is coupled to a first input terminal of a logic gate **310.** In this illustrative embodiment, logic gate **310** is a two-input AND gate. Transmit data, Tx, is coupled to a second input terminal two-input AND gate **310.** The output of AND gate **310** is a load-modulation control signal **208.** Referring back to Fig. 2, it can be seen that, in this illustrative embodiment, load-modulation control signal **208** is coupled to variable load-modulation load **204.** When load-modulation control signal **208** is asserted, the strength of the coupled reader field is above a predetermined value and a low impedance path between the antenna terminals **210, 212** is enabled for activation by the transmit data Tx.

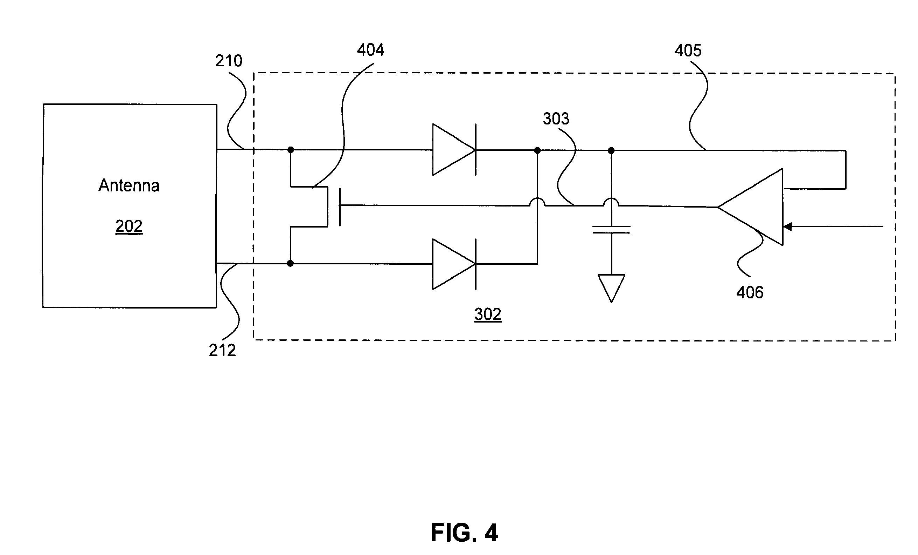

As noted above, shunt regulator **302** provides an input signal to comparator **306.** Fig. **4** is a simplified schematic diagram of a shunt regulator suitable for use in embodiments of the present invention. A tag, or tag emulator, antenna **202** provides differential signal pair **210, 212.** A FET **404** is coupled drain-to-source between differential signal pair **210, 212** and, in operation adjusts the power level of the differential recovered communications signal **210, 212** in response to a regulation control signal **303** that is applied to the gate terminal of FET **404.** FET **404** may be referred to as a shunt transistor. Shunt transistor **404** represents a controllable impedance that shunts at least some of the recovered communications signal **210** with at least some of the differential recovered communications signal **212** when regulation control signal **303** is greater than or equal to the threshold voltage of the FET. It will be appreciated by those skilled in the art that in a practical circuit, a FET does not operate as an "ideal" device and that there may be some small sub-threshold leakage current through the FET. Such sub-threshold conduction is generally insignificant for the purposes described herein and therefore is not discussed further. It will be further appreciated that any suitable circuit element or combination of circuit elements that can be operated to perform the power level adjustment described above may be used in various embodiments including a shunt regulator circuit.

Still referring to Fig. **4****,** the amount of the differential recovered communications signal **210, 212** that is shunted together is related to a magnitude of the regulation control signal **303.** The shunt transistor **404** will shunt more of the differential recovered communications signal **210, 212** together for a larger regulation control signal **303.** The magnitude of regulation control signal **303** increases as the voltage at node **405** increases. The voltage at node **405** increases as the signal received from antenna **202** increases.

It is noted that a signal from the shunt regulator is not necessarily the only source of information that may be used in connection with varying the load-modulation load. For example, in an NFC communicator device, even though an IQ demodulator is generally not powered up when the tag emulator is being used, in principle the IQ demodulator could be used as the source of information regarding the strength of the field coupling between tag and reader, and thus could be used in determining changes to the value of the load-modulation load.

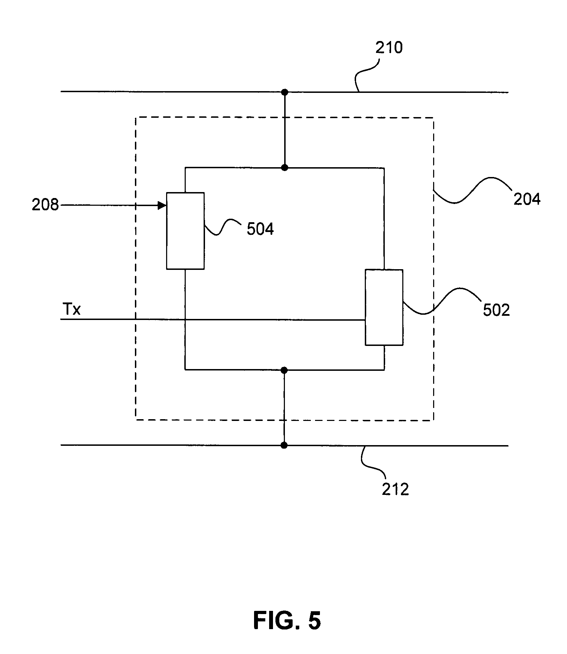

Fig. 5 is a high-level block diagram of an illustrative variable load-modulation load having a first portion directly controlled by transmit data, and a second portion controlled, at least in part, by the strength of the reader field coupled to the tag antenna. In this high-level representation of variable load-modulation load **204** a first switchable impedance **502,** directly controlled by transmit data signal Tx, is coupled between antenna terminals **210, 212;** and a second switchable impedance **504,** directly controlled by load modulation control signal **208,** is coupled between antenna terminals **210, 212.** In this way, when the strength of the coupled reader field is greater than a predetermined level, the parallel pathway of switchable impedance **504** is activated so that the low impedance portion of the transmit operation is an even lower impedance than can be achieved by activating switchable impedance **502** alone. Typical values for the load impedances are 16 ohms or less, but the present invention is not limited to any particular value of load impedance.

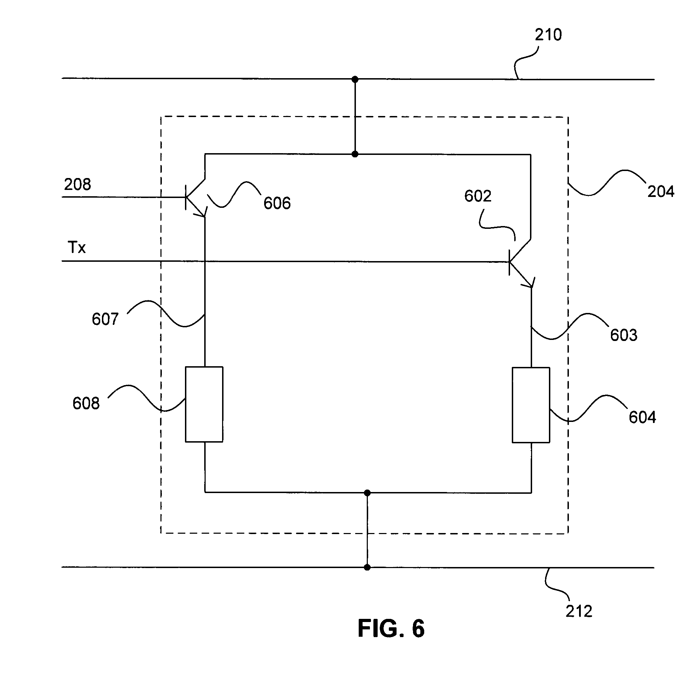

Fig. 6 is a schematic diagram of an illustrative variable load-modulation load including bipolar transistors, each in series with one or more components representing a predetermined impedance. In this alternative circuit arrangement, variable load-modulation load sub-circuit **204** includes a first bipolar transistor **602** coupled between the first side **210** of the tag antenna and a node 603, a second bipolar transistor **606** coupled between the first side **210** of the tag antenna and a node **607.** Variable load-modulation load sub-circuit **204** further includes a first impedance element **604** coupled between node **603** and the second side **212** of the tag antenna; and a second impedance element **608** coupled between node **607** and the second side **212** of the tag antenna. It is noted that impedance elements **604, 608** may have the same or different electrical characteristics, and may each be physically implemented with one or more, passive or active circuit elements.

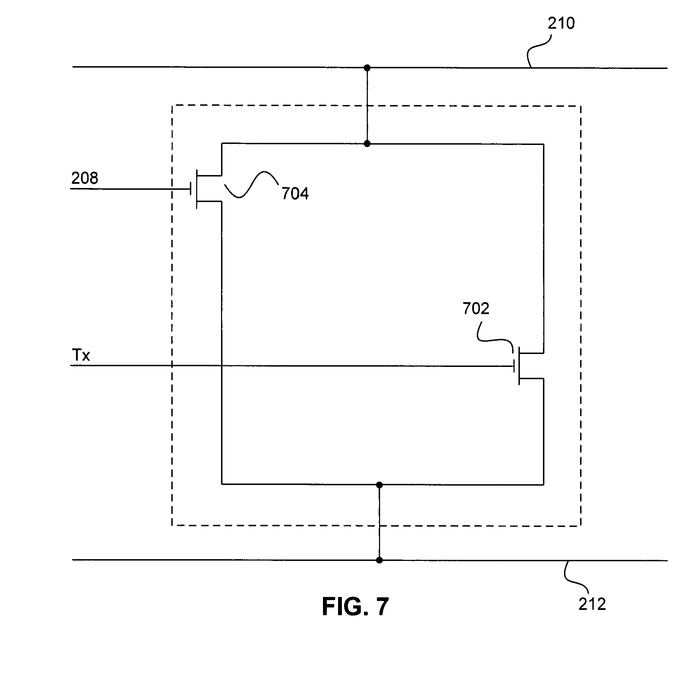

Fig. 7 is a schematic diagram of an illustrative variable load-modulation load sub-circuit including a pair of FETs coupled, drain-to-source, in parallel between the antenna terminals of a tag antenna. A first FET **702,** responsive to the digital transmit data signal Tx, switches between a high impedance state and a low impedance state. A second FET **704,** responsive to digital signal **208,** switches between a high impedance state and a low impedance state. When the strength of the field coupled to the tag antenna is greater than a predetermined value, then the voltage applied to the gate of FET **704** by signal **208** is such that FETs **702** and **704** operate concurrently in response to the transmit data. Consequently, when the reader field is strong, the change in impedance is greater relative to having only FET **702** switching. However, when the strength of the field coupled to the tag antenna is less than the predetermined value, then the voltage applied to the gate of FET **704** by signal **208** is such that it does not change responsive to the transmit data.

Those skilled in integrated circuit design will understand that as an alternative to turning on two parallel FETs in order to reduce the impedance of the load-modulation load, it is possible to use a single FET and apply two different voltages to the gate. In the case of n-channel FETs a higher voltage on the gate results in a lower on-resistance. In such an alternative implementation, signal **208** would enable the application of a higher gate voltage rather than turning on a second transistor.

Applying a voltage that varies over time with the logical combination of transmit data and coupled field strength to the gate of a FET coupled between the antenna terminals is one method of controlling the impedance of a load-modulation load. But in a FET, drain current (I_{DS}) does not have a linear relationship to drain voltage (V_{DS}). This can present additional design complexity. An alternative approach is to use a selected set of FETs in their fully on (i.e., low resistance state) to couple one or more circuit elements (e.g., resistors) into the pathway between antenna leads **210, 212.**

Embodiments using resistors for impedance control in the pathway between antenna leads **210, 212,** typically use resistors having fixed, voltage invariant resistance values. In some embodiments, the resistors may be trimmable so that a manufacturer may adjust these resistors for a particular application subsequent to the formation of the resistors. Trimming of resistors to modify their resistance values is well-known as are various methods of trimming.

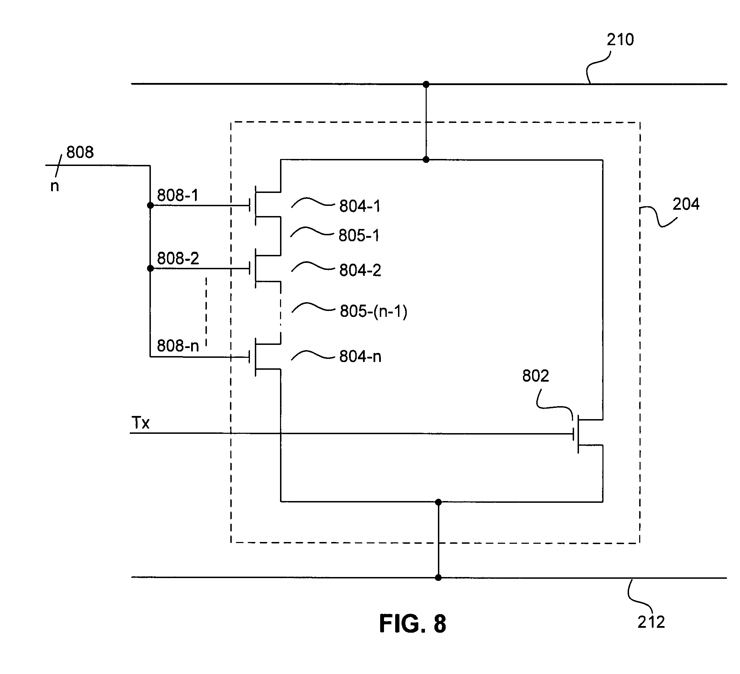

Fig. 8 is a schematic diagram of an illustrative variable load-modulation load sub-circuit including two parallel paths between the antenna terminals of a tag antenna, wherein at least one of the two parallel paths includes two or more FETs coupled to each other in series. More particularly, variable load-modulation load sub-circuit **204** has a first pathway that includes a FET **802** coupled drain-to-source between antenna terminals **210** and **212.** The impedance from drain to source of FET **802** is controlled by digital signal Tx, which represents the transmit data. A second pathway between antenna terminals **210** and **212** includes a plurality of FETs coupled drain-to-source in series. A first FET **804-1** is coupled drain-to-source between antenna terminal **210** and a node **805-1.** A second FET **804-2** of the plurality of series coupled FETs is coupled drain-to-source between node **805-1** and an (n-1)th node **805-(n-1).** An nth FET **804-n** is coupled drain-to-source between node **805-(n-1)** and antenna terminal **212.** Each of the gates of FETs **804-1, 804-2** and **804-n** in the second pathway is coupled to a respective one of control signals **808-1, 808-2, 804-n,** which are all constituent members of modulation load control bus **808** which is n bits wide. The impedance of the second pathway depends on several factors including, but not necessarily limited to, the number of FETs in series, the physical length and width of those FETs, the threshold voltage of the FETs, the subthreshold conduction characteristics of the FETs, and the voltage applied to the gates of those FETs.

Still referring to Fig. 8, it will be appreciated that that FETs **804-1, 804-2** and **804-n** may have the same or different physical widths and lengths; the same or different threshold voltages; the same or different subthreshold conduction characteristics; and the same or different voltages applied to their respective gates. Those skilled in the art of integrated circuit design can readily choose the parameters that are suitable for any particular application without undue experimentation.

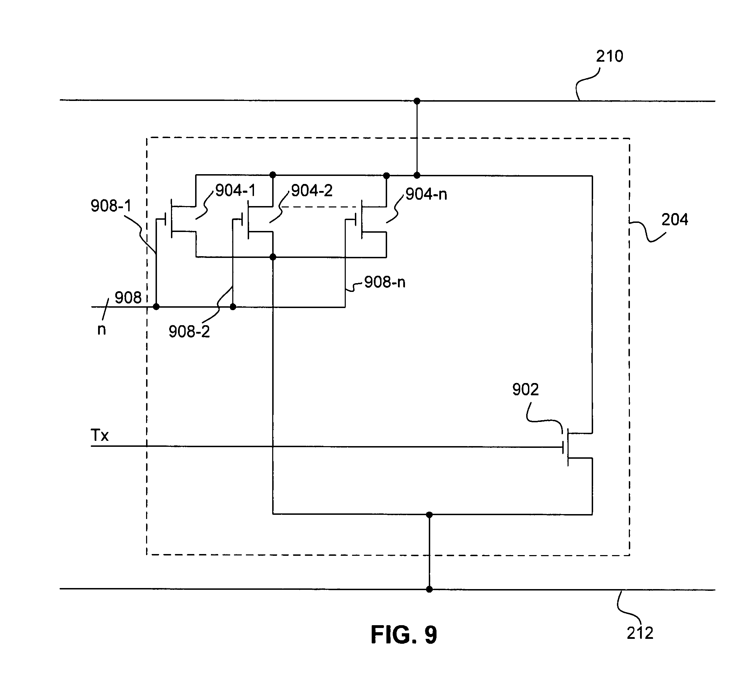

Fig. 9 is a schematic diagram of an illustrative variable load-modulation load including a plurality of parallel paths between the antenna terminals of a tag antenna, wherein a first one of the paths is directly controlled by transmit data, and the impedance of at least two of the other paths of the plurality of paths are dependent on the strength of the reader field coupled to the tag antenna. In this illustrative embodiment, a first pathway includes a FET **902** coupled drain-to-source between antenna terminals **210** and **212.** The impedance from drain to source of FET **902** is controlled by digital signal Tx, which represents the transmit data. A second pathway between antenna terminals **210** and **212** includes a plurality of FETs coupled drain-to-source in parallel with each other. A first FET **904-1** is coupled drain-to-source between antenna terminal **210** and antenna terminal **212;** a second FET **904-2** is coupled drain-to-source between antenna terminal **210** and antenna terminal **212;** and an nth FET **904-n** is coupled drain-to-source between antenna terminal **210** and antenna terminal **212.** The gates of FETs **904-1, 904-2,** ..., **904-n** are coupled respectively to control signals **908-1, 908-2,** and **908-n,** which are constituent members of n-bit wide modulation load control bus **908.** In this arrangement, the FETs may be turned on in any combination. FETs **904-1, 904-2,** ..., **904-n** may have the same or different electrical characteristics.

In an alternative arrangement, each of FETs **904-1, 904-2,** ... , **904-n** may be coupled in series with a fixed or variable impedance element. In such alternative arrangements an impedance element may be coupled between antenna terminal **210** and the drain of a FET, between the source of a FET and antenna terminal **212,** or both.

In further alternative embodiments the impedance elements may be selected from two or more sets of impedance elements by means of electrical programming. For example, fuses and/or anti-fuses may be electrically programmed to select among the aforementioned two or more sets of impedance elements and permanently connect the selected set to the switchable pathway that forms the field strength dependent variable load-modulation load.

Similarly, a non-volatile memory that can be reprogrammed may be used to specify which one of the two or more sets of impedance elements are selected.

It is noted that the load-modulation load is an impedance value and is not required to be a purely resistive load. In addition to the illustrative embodiments described above, wherein transistors and resistors are coupled between antenna terminals **210, 212,** other circuit elements such as, but not limited to, capacitors may also be switched in and out of the path between the antenna terminals (i.e., the load modulation path). Capacitors may be fixed value capacitors or voltage variable capacitors (varactors).

In another alternative, when load modulation impedance is to be set to a particular nominal value, the default switching path is de-selected and a new set of switchable paths is enabled for use with transmit data.

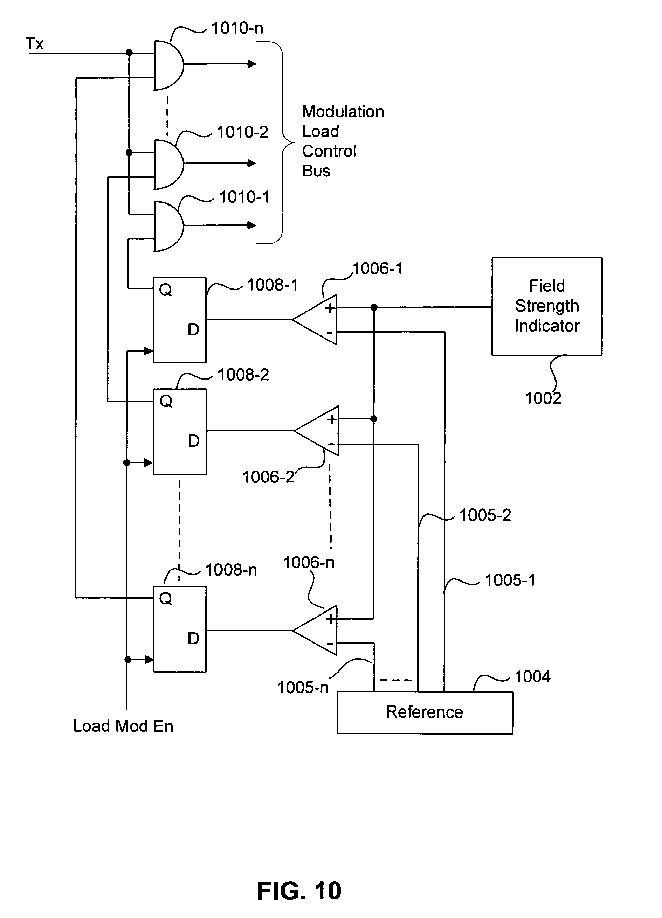

Fig. 10 is a schematic diagram of an illustrative control sub-circuit for a variable load-modulation load in accordance with the present invention. A field strength indicator **1002** generates an output signal that is indicative of the strength of a coupled reader field. A reference **1004** provides a plurality of reference values **1005-1, 1005-2, ..., 1005-n,** each of which is coupled respectively to a comparator **1006-1, 1006-2,** ..., **1006-n.** The comparators also each receive the output of field strength indicator **1002.** At each comparator in this illustrative embodiment, when the field strength indicator is greater than the respective reference value, a logical one is output by the comparator. The outputs of comparators **1006-1, 1006-2,** ... , **1006-n,** are latched in D-type flip-flops **1008-1, 1008-2, ..., 1008-n.** The Q outputs of D flip-flops **1008-1, 1008-2,** ... , **1008-n,** are each AND'ed with the transmit data, Tx, by a corresponding plurality of two-input AND gates **1010-1, 1010-2,** ..., **1010-n.** In this way, the operation of each FET in an impedance pathway can be individually controlled.

Still referring to Fig. 10, D flip-flops **1008-1, 1008-2,** ..., **1008-n,**are clocked by a signal referred to as LoadModEn. The flip flops are clocked so that new data is latched and the signals of the modulation load control bus are available prior to the beginning of a transmission.

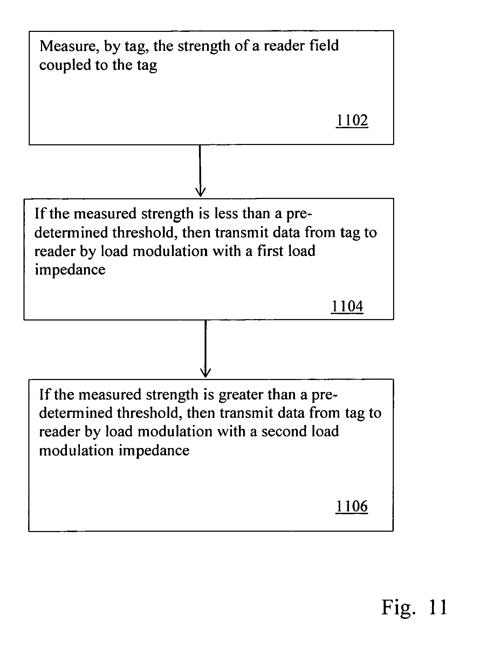

Fig. 11 is a flow chart of a method in accordance with the present invention. An illustrative method of communicating data from a tag to a reader includes measuring **1102,** by the tag, the strength of a reader field coupled to the tag, transmitting **1104,** if the measured strength is less than a predetermined threshold, data from the tag to the reader by load modulation with a first load impedance; and transmitting **1106,** if the measured strength is greater than a predetermined threshold, data from the tag to the reader by load modulation with a second load impedance; wherein the first and second load impedances are different. In various embodiments of the present invention the tag uses a signal from a shunt regulator disposed across the terminals of the tag antenna as a measure of the strength of the coupled reader field. If this measure indicates a coupled field strength greater than a predetermined amount, then communication via load modulation takes place with a load impedance that is lower than a load impedance that would be used when the couple field strength is less than the predetermined amount.

In one embodiment of the present invention, a method of operating an NFC-enabled device, includes selecting, at the communications device, a first load-modulation load; determining, by the communications device, a field strength of a field coupled to the communications device; selecting, at the communications device, a second load-modulation load, if the field strength is greater than a threshold value.

In another embodiment of the present invention, a method of operating a communications device, includes generating a signal indicative of a field strength of a tag reader field; comparing the signal to at least a first threshold and producing a comparison result signal; and producing a load-modulation load based at least in part on the comparison result signal.

In a still further embodiment, a method of operating an NFC-enabled device, includes providing a first load-modulation load and a second load-modulation load; generating a signal indicative of whether a strength of a field to which the NFC-enabled device is coupled is greater than a predetermined threshold value; selecting the first load-modulation load if the strength of the field is not greater than the predetermined threshold; and selecting the second load-modulation load if the strength of the field is greater than the predetermined threshold; wherein the second load-modulation load has a lower impedance than the first load-modulation load.

Those skilled in the art will appreciate that the present invention is not limited to the use of positive logic versus negative logic. Similarly, the present invention is not limited to any particular range of power supply voltages.

In typical embodiments of the present invention, there is no specific speed requirement for a transition or settling time for the change in load impedance to take effect. However, it must take effect in the time between LoadModEn being asserted and the transmission by load modulation starting. It is noted that this time period can be set by the system design engineer. And, since switching, i.e., set-up, of the load-modulation load takes place prior to a transmission beginning, there are no undesired sideband artifacts that result from load switching.

In an alternative implementation of the present invention, the field strength and threshold are in digital format. It is noted that a digital format presents a designer with various trade-offs, including but not limited to increased power consumption from converting one or more analog signals to the digital domain.

In some embodiments a continuously varying load-modulation load is used. A continuously varying load-modulation load is one that is able to change the magnitude of its impedance at the time. However, even though this presents a benefit in the theoretical sense, in practice the frame duration and speed of tag movement are such that any possible field change during transmission is very small.

In some embodiments a continuously variable load-modulation load is used. A continuously variable load-modulation load is one that is able to change to any value, rather than a limited number of discrete values. This requires more circuitry to implement, but has the advantage of getting closer to an optimum value of impedance across the antenna terminals for a given field strength.
In one illustrative embodiment, a near-field communication device, includes a load-modulation load sub-circuit operable to provide a continuously variable load-modulation load impedance, wherein the load-modulation load impedance provided by the load-modulation load sub-circuit is dependent on the data being transmitted, and a magnitude of a field strength coupled to the near-field communication device. The impedance of the load-modulation load sub-circuit is set by an analog signal derived from a sampled and held measurement of the field strength prior to data being transmitted. Typically, the field strength is a reader field strength.

It is noted that load modulation can be done by de-tuning, and therefore voltage variable components, including but not limited to varactors, may be used in the load-modulation paths between the antenna terminals.

Varying the load-modulation load impedance in accordance with the strength of the coupled reader field may be used for communication in both passive and active tags. As long as the tag is using load-modulation for communication changing the load impedance in accordance with the strength of the coupled reader field may be used.

Embodiments of the present invention have utility in at least NFC communication devices. NFC communication devices are known to be used in many application environments such as NFC tags, tag emulators, contactless cards, proximity cards, smart phones, computer tablets, key fobs, and so on. It is noted that varying a load-modulation load in a manner that depends on the strength of a coupled field in accordance with present invention is not limited to any particular application environment. That is, the present invention may be employed in any application, device, system or environment in which communication by way of load modulation is used.

### CONCLUSION

It is to be appreciated that the Detailed Description section, and not the Abstract of the Disclosure, is intended to be used to interpret the claims. The Abstract of the Disclosure may set forth one or more, but not all, exemplary embodiments of the invention, and thus, is not intended to limit the invention and the subjoined claims in any way.

The invention has been described above with the aid of functional building blocks illustrating the implementation of specified functions and relationships thereof. The boundaries of these functional building blocks have been arbitrarily defined herein for the convenience of the description. Alternate boundaries may be defined so long as the specified functions and relationships thereof are appropriately performed.

It will be apparent to those skilled in the relevant art(s) that various changes in form and detail can be made therein without departing from the spirit and scope of the invention. Thus the invention should not be limited by any of the above-described exemplary embodiments, but should be defined only in accordance with the subjoined claims and their equivalents.

## Claims

1. A method of operating a communications device, comprising:
selecting, at the communications device, a first load-modulation load;
determining, by the communications device, a field strength of a field coupled to the communications device;
selecting, at the communications device, a second load-modulation load, if the field strength is greater than a threshold value.

2. The method of claim 1, wherein the communications device is an NFC-enabled device.

3. The method of claim 1, wherein the field is an NFC reader field.

4. The method of claim 1, the first load-modulation load and the second load-modulation load each comprise one or more transistors.

5. The method of claim 1, further comprising load modulating the field with the first load-modulation load.

6. The method of claim 5, further comprising load modulating the field with the second load-modulation load.

7. The method of claim 6, wherein the load modulating with the first load and the second load occurs simultaneously.

8. A method of operating a communications device, comprising:
generating a signal indicative of a field strength of a tag reader field;
comparing the signal to at least a first threshold and producing a comparison result signal; and
producing a load-modulation load based at least in part on the comparison result signal.

9. A method of operating an NFC-enabled device, comprising:
providing a first load-modulation load and a second load-modulation load;
generating a signal indicative of whether a strength of a field to which the NFC-enabled device is coupled is greater than a predetermined threshold value;
selecting the first load-modulation load if the strength of the field is not greater than the predetermined threshold; and
selecting the second load-modulation load if the strength of the field is greater than the predetermined threshold;
wherein the second load-modulation load has a lower impedance than the first load-modulation load.

10. An NFC-enabled device, comprising:
an antenna;
a load-modulation load sub-circuit coupled to the antenna; and
a load-modulation load controller coupled to the antenna and to the load-modulation load sub-circuit;
wherein the load-modulation load controller provides one or more control signals to the load-modulation load sub-circuit; and
wherein the load-modulation load sub-circuit, responsive to the one or more control signals, provides a predetermined load impedance.

11. The NFC-enabled device of claim 10, wherein the load-modulation load controller includes a shunt regulator coupled to the antenna.

12. The NFC-enabled device of claim 10, wherein the predetermined load impedance includes a first impedance when the NFC-enabled device detects a reader field strength less than a threshold value, and a second impedance when the detected reader field strength is greater than the threshold value.

13. The NFC-enabled device of claim 12, wherein the first impedance is greater than the second impedance.

14. A near-field communication device, comprising:
a load-modulation load sub-circuit operable to provide at least two predetermined load-modulation load impedances;
wherein the load-modulation load impedance provided by the load-modulation load sub-circuit is dependent on the data being transmitted, and a magnitude of a reader field strength coupled to the near-field communication device.

15. A near-field communication device, comprising:
a load-modulation load sub-circuit operable to provide a continuously variable load-modulation load impedance;
wherein the load-modulation load impedance provided by the load-modulation load sub-circuit is dependent on the data being transmitted, and a magnitude of a field strength coupled to the near-field communication device.
